# EUROPEAN PATENT SPECIFICATION

(11) **EP 3 554 067 B1**
(45) Date of publication and mention of the grant of the patent: **30.12.2020**
(21) Application number: 17880290.6
(22) Date of filing: 16.11.2017
(51) Int. Cl.: H04N 7/18, G08B 13/18, G08B 25/00, G08B 25/10, H04B 7/15, H04N 5/225, H04N 5/232

(54) **CAMERA APPARATUS AND COMMUNICATION SYSTEM**
KAMERAVORRICHTUNG UND KOMMUNIKATIONSSYSTEM
APPAREIL DE CAMÉRA ET SYSTÈME DE COMMUNICATION

(30) Priority: 12.12.2016 JP 2016240511
(43) Date of publication of application: 16.10.2019
(73) Proprietor: Panasonic Intellectual Property Management Co., Ltd., Osaka-shi, Osaka 540-6207 (JP)
(72) Inventor: SAKAMOTO, Koji, Osaka-shi, Osaka 540-6207 (JP)
(74) Representative: Appelt, Christian W.
(86) International application number: PCT/JP2017/041192
(87) International publication number: WO 2018/110195

(56) References cited:
- JP-A- H10 224 668
- JP-A- 2002 044 650
- JP-A- 2008 131 427
- JP-A- 2016 039 437
- US-A1- 2016 284 170

## Description

### Technical Field

The present invention relates to camera apparatuses and communication systems and specifically, to a camera apparatus and a communication system for performing wireless communication with another device.

### Background Art

A home security monitoring system for monitoring the interior of a dwelling house has been known. This system includes: a plurality of sensor terminals configured to sense fire by using a smoke sensor disposed in the dwelling house; a gateway unit disposed in the dwelling house and configured to collect pieces of information sensed by the plurality of sensor terminals; and a server disposed outside the dwelling house and configured to communicate with the gateway unit over a network. In this system, when one or more of the plurality of sensor terminals sense fire, the gateway unit transmits, to the server, a support request signal. The server receives the support request signal and then provides, for example, service of sending a qualified person to the dwelling house of a customer or service of providing support such as a notification of emergency response given to a customer out of the dwelling house.

The number of occasions of installing a motion sensor, or the like outside (in a first area of) a dwelling house to monitor a periphery of the dwelling house has recently been increasing. In this case, when a system described in JP 5162034 B2 is adopted, an obstacle such as an outer wall exists in a path for wireless communication between a sensor installed outside a dwelling house and a gateway unit inside (in a second area of) the dwelling house, which increases the possibility of occurrence of an error caused in the wireless communication between the sensor and the gateway unit.

US 2016/284170 A1 describes a doorbell system which includes a doorbell and a remote communication device. The remote communication device is communicatively coupled to a wireless network of a building, to the doorbell, and to a remote computing device.

### Summary of Invention

The present invention relates to a camera apparatus according to claim 1 and a communication system according to claim 6. Claims 2 to 5 refer to specifically advantageous realizations of the camera apparatus according to claim 1.

In view of the foregoing, it is an object of the present invention to provide a camera apparatus and a communication system which are configured to reduce the possibility of occurrence of an error in communication between a device disposed in a first area separated from a second area by an obstacle and a device disposed in the second area.

A camera apparatus of one aspect of the present invention includes a camera unit, a relay unit, and a connector. The camera unit is disposed in a first area separated from a second area by an obstacle. The camera unit includes a camera module configured to capture an image of part of the first area. The relay unit is disposed in the second area. The relay unit has a function of transmitting the image captured by the camera unit to a first device in the second area by wireless communication. The connector electrically connects the camera unit to the relay unit. The camera unit further includes a communicator. The communicator is configured to perform wireless communication with a second device which is disposed in the first area and is configured to perform monitoring in the first area. The relay unit further has at least one of a function of transmitting, to the first device, a monitoring result by the second device which is transmitted from the second device and received by the communicator, and a function of transmitting, via the communicator to the second device, information transmitted from the first device and addressed to the second device.

A communication system according to another aspect of the present invention includes: the above-described camera apparatus; at least one first device; and at least one second device. The at least one first device is disposed in a second area separated from a first area by an obstacle. The at least one first device is configured to perform wireless communication with the camera apparatus. The at least one second device is disposed in the first area and is configured to perform wireless communication with the camera apparatus.

According to the present invention, it is possible to reduce the possibility of occurrence of an error in communication between a device disposed in a first area and device disposed in a second area, the first area and the second area being separated from each other by an obstacle.

### Brief Description of Drawings

FIG. 1 is a view illustrating an overview of a camera apparatus and a communication system including the camera apparatus of one embodiment;
FIG. 2 is a view illustrating an installation example of the camera apparatus;
FIG. 3 is a view illustrating an attachment example of the camera apparatus; and
FIG. 4 is a view illustrating a configuration of the camera apparatus.

### Description of Embodiments

An embodiment and variations described below are mere examples of the present invention. The present invention is not limited to the embodiment and the variations. Various modifications may be made to embodiments other than the embodiment and the variations depending on design and the like within the scope of the technical idea of the present invention.

### Embodiment

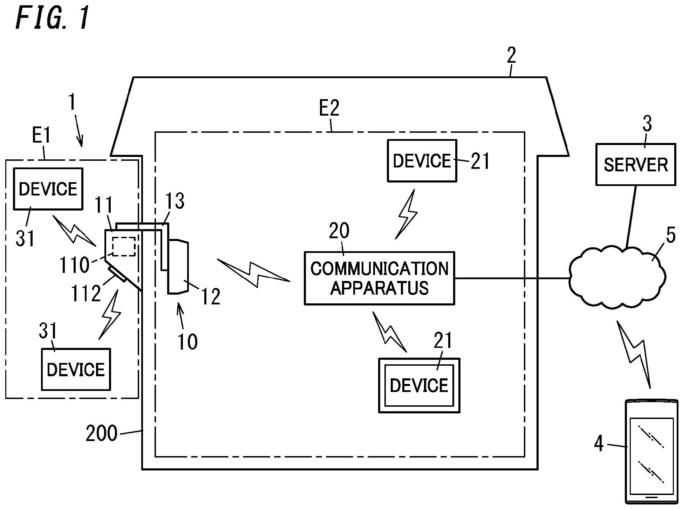

A communication system 1 and a camera apparatus 10 of the present embodiment will be described with reference to FIGS. 1 to 4.

The communication system 1 is a system provided to a dwelling house 2. As illustrated in FIG. 1, the communication system 1 includes the camera apparatus 10, a plurality of devices 31 (second devices), a communication apparatus 20 (first device), and a plurality of devices 21. The plurality of devices 31 are disposed outside (in a first area E1 of) the dwelling house 2 and are configured to communicate with the camera apparatus 10. The communication apparatus 20 and the plurality of devices 21 are disposed inside (in a second area E2 of) the dwelling house 2. The communication apparatus 20 is configured to perform wireless communication with the camera apparatus 10. Each of the plurality of devices 21 is configured to perform wireless communication with the communication apparatus 20. In this embodiment, the dwelling house 2 is a building such as each dwelling unit of a multiple residential dwelling complex, a detached dwelling house, an office, a factory, or a retail establishment. In the present embodiment, the dwelling house 2 is a detached dwelling house. The first area E1 is an area in which the devices 31 are allowed to communicate with the camera apparatus 10 and which includes a fence or the like surrounding the dwelling house 2. The devices 31 are provided to the fence, or the like. The second area E2 is an area including an area in which the communication apparatus 20 is allowed to communicate with the camera apparatus 10 and an area in which each of the plurality of devices 21 is allowed to communicate with the communication apparatus 20.

The devices 21 disposed inside the dwelling house 2 monitor a situation inside the dwelling house 2 (the safety of a dweller, a break-in by a third party, and the like). The devices 31 disposed outside the dwelling house 2 monitor a situation outside the dwelling house 2 (a break-in of a garden or the like of the dwelling house 2 by a third party).

The devices 31 is powered by, for example, batteries to perform monitoring outside the dwelling house 2. The devices 31 are, for example, motion sensors. Each device 31 performs wireless communication with the camera apparatus 10 to transmit a monitoring result to the camera apparatus 10. Note that the devices 31 may be alarms, doorbells, monitoring cameras, or the like. Here, when each device 31 is a motion sensor, the monitoring result indicates whether a person is sensed or not. When each device 31 is a monitoring camera, the monitoring result is a video image captured.

The camera apparatus 10 transmits an image captured by the camera apparatus 10 to the communication apparatus 20 by wireless communication. The camera apparatus 10 performs wireless communication with the communication apparatus 20 to transmit the monitoring result from each device 31 to the communication apparatus 20.

The wireless communication between each device 31 and the camera apparatus 10 is different from the wireless communication between the camera apparatus 10 and the communication apparatus 20 in terms of a wireless communication scheme. The wireless communication between the camera apparatus 10 and the communication apparatus 20 adopts a first communication scheme for packetizing and wirelessly transmitting and receiving data having a relatively large data amount (e.g., image data, voice data, or the like). The wireless communication between each device 31 and the camera apparatus 10 adopts a second communication scheme for packetizing and wirelessly transmitting and receiving data having a relatively small data amount.

Communication based on the first communication scheme is communication based on a communication scheme compliant with, for example, Wi-Fi (registered trademark). Note that the first communication scheme is not limited to a communication scheme compliant with Wi-Fi (registered trademark) but is at least a communication method which enables data having a relatively large data amount to be transmitted and received by wireless communication. The communication based on the second communication scheme is, for example, wireless communication with low-power consumption.

Each device 21 is powered by, for example, a battery, performs the wireless communication with the communication apparatus 20 by using a radio wave as a transmission medium, and transmits a monitoring result to the communication apparatus 20. In this embodiment, in the wireless communication between each device 21 and the communication apparatus 20, data having a relatively small data amount is packetized and is wirelessly transmitted and received.

The communication apparatus 20 operates with electric power supplied from a commercial power supply. The communication apparatus 20 is connected to a server 3 via a network 5 such as the Internet. Note that the network 5 is not limited to the Internet. For example, the network 5 is at least a technique for enabling communication between the communication apparatus 20 and the server 3.

The communication apparatus 20 transmits the monitoring results by the devices 21 and 31 to the server 3 over the network 5. The communication apparatus 20 transmits an image captured by the camera apparatus 10 to the server 3 over the network 5. Moreover, the communication apparatus 20 displays the image captured by the camera apparatus 10 in a display section included in the communication apparatus 20.

The server 3 transmits information acquired from the communication apparatus 20 over the network 5 to an information terminal 4 of a dweller of the dwelling house 2. The information terminal 4 is a terminal portable by the dweller of the dwelling house 2 and is, for example, a smartphone, a mobile phone, or the like.

In the present embodiment, the dwelling house 2 has a wall 2a (partition wall) defining a boundary between an inner side and an outer side of the dwelling house 2. The wall 2a is an obstacle 200 between each device 31 and a set of the communication apparatus 20 and the devices 21. The wall 2a has an opening 2b and an entrance door 2c (openable and closable unit) openable and closeable at the opening 2b. The opening 2b allows a dweller to enter or go out of the dwelling house. The entrance door 2c is opened and closed to draw a circular arc by pivoting on an axis corresponding to the gravity direction.

Next, the camera apparatus 10 will be described. As illustrated in FIG. 1, the camera apparatus 10 includes a camera unit 11, a relay unit 12, and a connector 13.

The camera unit 11 is disposed on the outer side of the dwelling house 2. The relay unit 12 is disposed on the inner side of the dwelling house 2. The connector 13 electrically connects the camera unit 11 to the relay unit 12.

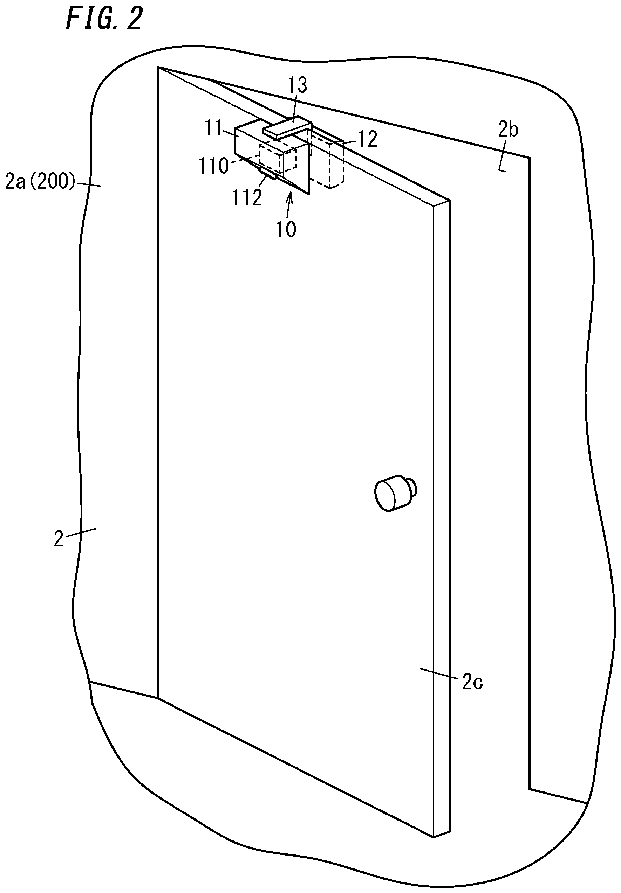

The camera unit 11 of the camera apparatus 10 is attached to an outdoor side of the entrance door 2c. The relay unit 12 of the camera apparatus 10 is attached to an indoor side of the entrance door 2c (see FIG. 2).

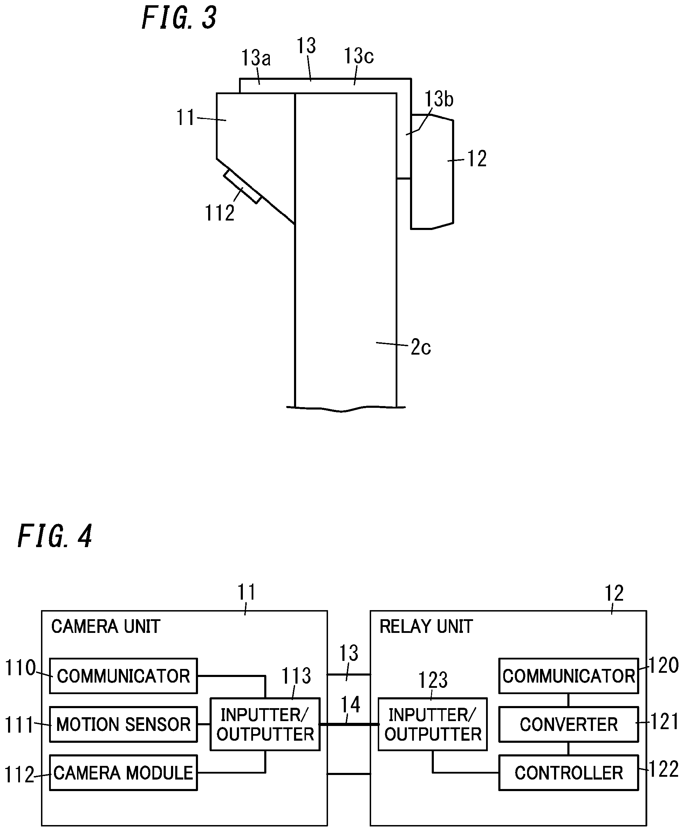

The connector 13 is an L-shaped flat plate. The connector 13 has one end serving as a first fixing part 13a for fixing the camera unit 11 and the other end serving as a second fixing part 13b for fixing the relay unit 12 (see FIG. 3). The connector 13 includes a coupler 13c coupling the first fixing part 13a to the second fixing part 13b (see FIG. 3). When the camera apparatus 10 is attached, the coupler 13c is disposed in a gap formed between the entrance door 2c and the opening 2b with the entrance door 2c being in a closed state.

The connector 13 is provided with a cable 14 electrically connecting the camera unit 11 to the relay unit 12 to enable communication (see FIG. 4). A path from the first fixing part 13a via the coupler 13c to the second fixing part 13b has a groove in which the cable 14 is embedded. Here, the cable 14 is, for example, a signal line.

The camera unit 11 is powered by a battery, and as illustrated in FIG. 4, the camera unit 11 includes a communicator 110, a motion sensor 111, a camera module 112, and an inputter/outputter 113.

The communicator 110 performs wireless communication with each of the plurality of devices 31 based on the second communication scheme.

The motion sensor 111 is, for example, a Passive Infra-Red (PIR) sensor and is configured to sense the presence or absence of a person around a site where the motion sensor 111 is attached.

When the motion sensor 111 senses a person, the camera module 112 captures an image of a partial area of a first area E1. The partial area is around a site where the camera module 112 is attached.

The inputter/outputter 113 performs transmission and reception of a signal (information) via the cable 14 to and from the relay unit 12 by wired communication.

The relay unit 12 operates with electric power supplied from a commercial power supply. As illustrated in FIG. 4, the relay unit 12 includes a communicator 120, a converter 121, a controller 122, and an inputter/outputter 123.

The communicator 120 performs wireless communication with the communication apparatus 20 based on the first communication scheme.

The converter 121 performs protocol conversion of a signal. Specifically, the converter 121 converts a signal transmitted from the device 31 based on a second communication scheme into a signal available for transmission based on the first communication scheme. The converter 121 converts a signal transmitted based on the first communication scheme into a signal available for transmission based on the second communication scheme.

The controller 122 includes a microcomputer including a Central Processing Unit (CPU) and memory as main components. In other words, the controller 122 is realized by a computer including the CPU and the memory, and the CPU executes a program stored in the memory, so that the computer functions as the controller 122. In this embodiment, the program is stored in the memory of the controller 122 in advance. However, the program may be provided over telecommunications network such as the Internet, or as a recording medium such as a memory card storing the program therein.

The controller 122 performs a process according to a signal received via the inputter/outputter 123 from the camera unit 11 and performs a process according to a signal received via the communicator 120 from the communication apparatus 20.

The inputter/outputter 123 performs transmission and reception of a signal (information) between the cable 14 and the camera unit 11 by wired communication.

Next, operation of the camera apparatus 10 will be described.

The relay unit 12 of the camera apparatus 10 of the present embodiment stores in advance an identifier associated with the camera unit 11 and identifiers each associated with a corresponding one of the plurality of devices 31. Moreover, a signal transmitted from the camera unit 11 contains an identifier of the camera unit 11 as a transmission source, and a signal transmitted from each of the plurality of devices 31 contains an identifier of a corresponding one of the plurality of devices 31 as a transmission source. Moreover, the camera module 112 is electrically connected via a switch to the battery, by which the camera unit 11 is powered. When capturing an image is not performed, the switch is in an open state, that is, the camera module 112 and the battery are in a non-conductive state, and the battery supplies no electric power to the camera module 112. When capturing an image is performed, the switch is in a closed state, that is, the camera module 112 and the battery are in a conductive state, and battery supplies electric power to the camera module 112.

First, operation of the camera apparatus 10 to start capturing an image depending on a sensing result by the motion sensor 111 will be described.

The motion sensor 111 outputs, to the relay unit 12, a sensing result of a person at an installation site of the camera apparatus 10.

When the controller 122 receives a sensing result representing that a person is sensed from the motion sensor 111 with the non-conduction state between the battery and the camera module 112, the controller 122 switches the non-conduction state between the camera module 112 and the battery to a conduction state. When the conduction state is established between the battery and the camera module 112, the camera module 112 starts capturing an image. The controller 122 maintains the conduction state between the battery and the camera module 112 until the controller 122 receives a sensing result representing that a person is not sensed from the motion sensor 111.

When the controller 122 receives the sensing result representing that a person is not sensed from the motion sensor 111 in the conduction state between the battery and the camera module 112, the controller 122 switches the conduction state between the camera module 112 and the battery to the non-conduction state. When the non-conduction state is established between the battery and the camera module 112, the camera module 112 stops capturing images. The controller 122 maintains the non-conduction state between the battery and the camera module 112 until the controller 122 receives a sensing result representing that a person is sensed from the motion sensor 111.

Next, operation of transmission of a signal from the camera apparatus 10 to the communication apparatus 20 will be described.

The controller 122 of the relay unit 12 receives a signal (information) via the inputter/outputter 123 from the camera unit 11. The controller 122 identifies a transmission source of the signal received based on an identifier contained in the signal received and a plurality of identifiers stored in advance. Specifically, the controller 122 identifies, as a transmission source, a camera unit 11 or an device 31 corresponding to an identifier which corresponds to the identifier included in the signal received and which is included in the identifiers of the camera unit 11 and the plurality of devices 31, the identifiers having been stored in advance.

When the transmission source of the signal is the camera unit 11, the controller 122 causes the converter 121 to perform protocol conversion on the signal received. At this time, the converter 121 converts the signal received from the camera unit 11 into a signal available for transmission based on the first communication scheme. The communicator 120 transmits the signal after the protocol conversion by the converter 121 to the communication apparatus 20 based on the first communication scheme. Note that if another signal (a signal whose transmission source is the device 31) is being transmitted to the communication apparatus 20, the controller 122 preferentially transmits the signal whose transmission source is the camera unit 11 based on an interruption process.

When the transmission source of the signal is the device 31, the controller 122 determines, based on a process state of the relay unit 12, whether or not the signal is to be transmitted. Specifically, the controller 122 determines whether or not another signal is being transmitted to the communication apparatus 20. If the controller 122 determines that another signal is being transmitted, the controller 122 discards the signal received and requests, via the communicator 110 of the camera unit 11, the transmission source to transmit a signal again. If the controller 122 determines that another signal is not being transmitted, the controller 122 causes the converter 121 to perform protocol conversion on the signal received. At this time, the converter 121 converts the signal received from the device 31 into a signal available for transmission based on the first communication scheme. The communicator 120 transmits the signal after the protocol conversion by the converter 121 to the communication apparatus 20 based on the first communication scheme.

Alternatively, when the controller 122 determines that another signal is being transmitted, the controller 122 does not have to discard the signal received but may hold the signal received until the transmission of the another signal is finished. In this case, the controller 122 does not request the transmission source to transmit a signal again. When the transmission of the another signal is finished, the controller 122 transmits the signal held.

Next, operation of transmission of a signal from the camera apparatus 10 to the devices 31 disposed on the outer side of the dwelling house 2 will be described.

When the converter 121 of the relay unit 12 receives, via the communicator 120, a signal containing information regarding control of the camera unit 11 or the devices 31 from the communication apparatus 20, the converter 121 converts the signal into a signal available for transmission based on the second communication scheme.

The controller 122 of the relay unit 12 performs a process based on a content of the signal obtained by the conversion by the converter 121. Specifically, the controller 122 determines whether the signal received from the communication apparatus 20 is addressed to the camera unit 11 or the device 31.

When the controller 122 determines that the signal is addressed to the camera unit 11, the controller 122 controls the camera unit 11 in accordance with information contained in the signal. Examples of the information contained in the signal addressed to the camera unit 11 include information for instructing the camera module 112 to start capturing an image. When the information contained in the signal is an instruction for staring capture of an image, the controller 122 switches the non-conduction state between the camera module 112 and the battery to the conduction state to cause the camera module 112 to start capturing an image.

If the controller 122 determines that the signal is addressed to the device 31, the controller 122 transmits the signal obtained by the protocol conversion by the converter 121 to the device 31 via the communicator 110 of the camera unit 11 so as to control the operation of the device 31. Examples of the information contained in the signal addressed to the device 31 include an instruction regarding the operation of the device 31. For example, when the device 31 is an alarm, the information is an instruction for outputting an alarm sound. When the information contained in the signal addressed to the device 31 is an instruction for outputting an alarm sound, the device 31 outputs the alarm sound. Alternatively, when the device 31 is a monitoring camera, the information contained in the signal addressed to the device 31 is an instruction for starting capture of an image.

As described above, in the present embodiment, the cable 14 for transmitting data of an image captured by the camera unit 11 is also used to transmit the signal received from the device 31. Thus, even in a situation in which transmission of a signal from the device 31 to the interior of the dwelling house 2 is difficult due to an obstacle or the like, it is possible to perform highly reliable signal transmission.

### (Variation)

Variations will be described below. Note that the variations described below are applicable accordingly in combination with the above-described embodiment.

In the embodiment, an attachment place of the camera apparatus 10 is the entrance door 2c, but the attachment place is not limited to this embodiment. The camera apparatus 10 may be attached to a window of the dwelling house 2.

Moreover, in the embodiment, the camera unit 11 of the camera apparatus 10 is disposed outside the dwelling house 2, and the relay unit 12 of the camera apparatus 10 is disposed inside the dwelling house 2, but this should not be construed as limiting. It is required only that the camera unit 11 is disposed in a first area E1 of two areas (first area E1 and second area E2) separated from each other by an obstacle such as a wall, and the relay unit 12 is disposed in the second area E2. For example, if in a building, an obstacle (wall) defines a boundary between a corridor (first area E1) and a room (second area E2), the camera unit 11 and the relay unit 12 may be respectively disposed in the corridor and the room.

In the embodiment, the converter 121 is included in the relay unit 12, but this should not be construed as limiting. The converter 121 may be included in the camera unit 11. That is, the converter 121 is included in either the camera unit 11 or the relay unit 12.

In the embodiment, the camera unit 11 is powered by a battery, but this should not be construed as limiting. The camera unit 11 may operate with electric power supplied from a commercial power supply. For example, the camera unit 11 is supplied with electric power via a power line from the relay unit 12. In this case, transmission and reception of signals between the camera unit 11 and the relay unit 12 are performed by power line communication. That is, the power line corresponds to the cable 14. Alternatively, when electric power is supplied from the relay unit 12 to the camera unit 11, transmission and reception of signals may be performed by the signal line but not by the power line.

In the embodiment, the shape of the connector 13 is an L-shape, but this should not be construed as limiting. The shape of the connector 13 is at least a shape which enables a connection between the camera unit 11 disposed in one area and the relay unit 12 disposed on the other area with an obstacle (e.g., a wall) disposed therebetween.

Moreover, the connector 13 connecting the camera unit 11 to the relay unit 12 may include only the cable 14.

The camera unit 11 may further be provided with at least one of a microphone and a loudspeaker. For example, when both of the microphone and the loudspeaker are provided, conversation is possible between a dweller in the dwelling house 2 and a person outside the dwelling house 2. Moreover, when the loudspeaker is provided, it is possible to output an alarming sound to a suspicious individual.

In the embodiment, sensing a person by the motion sensor 111 triggers the camera module 112 to start capturing an image, but this should not be construed as limiting. When a doorbell is provided as the device 31, pushing the doorbell may trigger the camera module 112 to start capturing an image. Note that the doorbell may be provided to the camera unit 11. When the camera module 112 captures an image in an interlinked matter with the doorbell, the motion sensor 111 is not an essential component.

In the embodiment, the motion sensor 111 is provided to the camera unit 11, but this should not be construed as limiting. The camera unit 11 does not have to include the motion sensor 111. In this case, the camera module 112 of the camera unit 11 may be interlinked with another device such as a doorbell as described above to capture an image or to continuously capture images.

In the embodiment, the camera apparatus 10 has both a function of transmitting a signal received from the device 31 to the communication apparatus 20 and a function of transmitting a signal received from the communication apparatus 20 to the device 31. However, this should not be construed as limiting. The camera apparatus 10 includes at least one function of the functions.

In the embodiment, the communication apparatus 20 performs wireless communication with the plurality of devices 21 based on the second communication scheme. Thus, depending on a distance between the communication apparatus 20 and the device 31 disposed outside the dwelling house 2 or the intensity of a signal transmitted from the device 31, the communication apparatus 20 can receive the signal transmitted from the device 31. When the communication apparatus 20 directly receives the signal from the device 31, the communication apparatus 20 may discard the signal received and stand by for transmission of a signal with a similar content from the camera apparatus 10. Alternatively, the communication apparatus 20 performs a process based on the signal directly received from the device 31, and receives a signal with a similar content transmitted from the camera apparatus 10, the communication apparatus 20 may discard the signal received.

In the embodiment, the communication scheme of communication between the device 31 and the camera apparatus 10 is different from the communication scheme of the communication between the camera apparatus 10 and the communication apparatus 20, but this should not be construed as limiting. The communication between the device 31 and the camera apparatus 10 may be the same as the communication between the camera apparatus 10 and the communication apparatus 20.

In the embodiment, the cable 14 transmits a signal containing image data or the like generated by the camera unit 11 and transmits a signal from the device 31, but this should not be construed as limiting, a cable for transmission of the signal containing image data or the like generated by the camera unit 11 may be different from a cable for transmission of the signal from the device 31.

In the embodiment, the plurality of devices 31 are disposed outside the dwelling house 2, and the communication apparatus 20 and the plurality of devices 21 are disposed inside the dwelling house, but this should not be construed as limiting. At least one device 31 is disposed outside the dwelling house 2. At least the communication apparatus 20 is disposed inside the dwelling house 2.

In the embodiment, the camera unit 11 may include a controller including a microcomputer including a CPU and memory as main components. The controller of the camera unit 11 switches between the conduction state and the non-conduction state between the camera module 112 and the battery. Thus, it is possible to allocate the process between the camera unit 11 and the relay unit 12.

### (Summary)

As described above, a camera apparatus (10) of the first aspect includes a camera unit (11), a relay unit (12), and a connector (13) connecting the camera unit (11) to the relay unit (12). The camera unit (11) is disposed in a first area (E1) separated from a second area (E2) by an obstacle (200). The camera unit (11) includes a camera module (112) configured to capture an image of part of the first area (E1). The relay unit (12) is disposed in the second area (E2). The relay unit (12) has a function of transmitting the image captured by the camera unit (11) to a first device (communication apparatus 20) in the second area (E2) by wireless communication. The camera unit (11) further includes a communicator (110). The communicator (110) is configured to perform wireless communication with a second device (device 31) which is disposed in the first area (E1) and is configured to perform monitoring in the first area (E1). The relay unit (12) further has at least one of the following two functions. The first function is a function of transmitting, to the first device, a monitoring result by the second device, the monitoring result being transmitted from the second device and being received by the communicator (110). The second function is a function of transmitting, via the communicator (110) to the second device, information transmitted from the first device and addressed to the second device.

In this configuration, the camera apparatus (10) is disposed in a communication path of wireless communication between the first device and the second device disposed with the obstacle (200) therebetween. Thus, it is possible to reduce the possibility of occurrence of an error in the communication between the first device and the second device.

In a camera apparatus (10) of a second aspect referring to the first aspect, the obstacle (200) is a partition wall (2a) having an opening (2b) and an openable and closable unit (entrance door 2c). The opening (2b) extends from the first area (E1) through the second area (E2). The openable and closable unit is openable and closeable at the opening (2b). The connector (13) includes a first fixing part (13a) which fixes the camera unit (11), a second fixing part (13b) which fixes the relay unit (12), and a coupler (13c) which couples the first fixing part (13a) to the second fixing part (13b) and which is disposed in a gap between the opening (2b) and the openable and closable unit.

With this configuration, the camera apparatus (10) is installed in the gap in the obstacle (200). That is, it is possible to easily install the camera apparatus (10) without forming a hole or the like in the obstacle (200).

In a camera apparatus (10) of a third aspect referring to the first or second aspect, connector (13) includes a signal line electrically connecting the camera unit (11) to the relay unit (12) and enabling communication between the camera unit (11) and the relay unit (12).

In this configuration, the camera unit (11) is connected to the relay unit (12) with wire, and thus, it is possible to increase the reliability of communication between the camera unit (11) and the relay unit (12).

In a camera apparatus (10) of a fourth aspect referring to any one of the first to third aspects, wireless communication between the first device and the relay unit (12) is performed based on a first communication scheme. Wireless communication between the second device and the communicator (110) of the camera unit (11) is performed based on the second communication scheme. The camera unit (11) or the relay unit (12) includes a converter (121). The converter (121) is configured to convert, for transmission of the monitoring result by the second device to the first device, a signal containing the monitoring result transmitted based on the second communication scheme into a signal available for transmission based on the first communication scheme. The converter (121) is configured to convert, for transmission of the information on the first device to the second device, a signal containing the information transmitted based on the first communication scheme into a signal available for transmission based on the second communication scheme.

With this configuration, it is possible to select a communication scheme appropriate for each of the first area (E1) and the second area (E2). For example, when two devices that perform wireless communication with each other are devices powered by batteries (e.g., the device 31 and the camera unit 11), it is possible to select, as a communication scheme, a communication scheme with low energy consumption. When both devices that perform wireless communication with each other are devices that operate with electric power supplied from the commercial power supply (e.g., the communication apparatus 20 and the relay unit 12), it is possible to select, as a communication scheme, to a high-capacity communication scheme.

In a camera apparatus (10) of a fifth aspect referring to any one of the first to fourth aspects, the relay unit (12) has a function of transmitting the monitoring result by the second device to the first device. In this case, when the relay unit (12) receives a signal containing the monitoring result transmitted by the second device, the relay unit (12) determines, depending on a process state of the relay unit (12), whether or not the monitoring result contained in the signal is to be transmitted to the first device, and when the relay unit (12) determines that the monitoring result is to be transmitted, the relay unit (12) transmits the monitoring result to the first device.

This configuration enables the relay unit (12) to determine, depending on the process state, whether or not the monitoring result has to be transmitted to the first device.

A communication system (1) of a sixth aspect includes the camera apparatus (10) of any one of the first to fifth aspects, at least one first device (e.g., communication apparatus 20), and at least one second device (device 31). The at least one first device is disposed in a second area (E2) separated from a first area (E1) by an obstacle. The at least one first device is configured to perform wireless communication with the camera apparatus (10). The at least one second device is disposed in the first area (E1). The at least one second device is configured to perform wireless communication with the camera apparatus (10).

According to this configuration, it is possible to reduce the possibility of occurrence of an error in communication between a device disposed in the first area (E1) and a device disposed in the second area (E2).

### Reference Signs List

- 1: COMMUNICATION SYSTEM
- 2a: WALL (PARTITION WALL)
- 2b: OPENING
- 2c: ENTRANCE DOOR (OPENABLE/CLOSABLE UNIT)
- 10: CAMERA APPARATUS
- 11: CAMERA UNIT
- 12: RELAY UNIT
- 13: CONNECTOR
- 13a: FIRST FIXING PART
- 13b: SECOND FIXING PART
- 13c: COUPLER
- 14: CABLE (SIGNAL LINE)
- 20: COMMUNICATION APPARATUS (FIRST DEVICE)
- 31: DEVICE (SECOND DEVICE)
- 110: COMMUNICATOR
- 112: CAMERA MODULE
- 121: CONVERTER
- E1: FIRST AREA
- E2: SECOND AREA

## Claims

1. A camera apparatus (10), comprising:
a camera unit (11) disposed in a first area (El) separated from a second area (E2) by an obstacle (200), the camera unit (11) including a camera module (112) configured to capture an image of part of the first area (El);
a relay unit (12) disposed in the second area (E2), the relay unit (12) having a function of transmitting the image captured by the camera unit (11) to a first device (20) in the second area (E2) by wireless communication; and
a connector (13) which electrically connects the camera unit (11) to the relay unit (12),
the camera unit (11) further including a communicator (110) configured to perform wireless communication with a second device (31) which is disposed in the first area (E1) and is configured to perform monitoring in the first area (E1),
the relay unit (12) further having a function of transmitting, to the first device (20), a monitoring result by the second device (31) which is transmitted from the second device (31) and received by the communicator (110),
**characterized in that**:
when the relay unit (12) receives a signal containing the monitoring result transmitted by the second device (31), the relay unit (12) is configured to determine whether or not another signal is being transmitted to the first device (20); and
if the relay unit (12) determines that another signal is not being transmitted, the relay unit (12) is configured to transmit the monitoring result to the first device (20); and
if the relay unit (12) determines that another signal is being transmitted,
i) the relay unit (12) is configured to discard the signal received and to request the second device (31) to transmit a signal again, or
ii) the relay unit (12) is configured to hold the signal received until the transmission of the another signal is finished, and when the transmission of the another signal is finished, the relay unit (12) is configured to transmit the signal held.

2. The camera apparatus (10) of claim 1, wherein
the obstacle (200) is a partition wall (2a) having an opening (2b) and an openable and closable unit (2c), the opening (2b) extending from the first area (E1) through the second area (E2), the openable and closable unit (2c) being openable and closeable at the opening (2b),
the connector (13) includes
a first fixing part (13a) which fixes the camera unit (11),
a second fixing part (13b) which fixes the relay unit (12), and
a coupler (13c) which couples the first fixing part (13a) to the second fixing part (13b) and which is disposed in a gap between the opening (2b) and the openable and closable unit (2c).

3. The camera apparatus (10) of claim 1 or 2, wherein
the connector (13) includes a signal line electrically connecting the camera unit (11) to the relay unit (12) and enabling communication between the camera unit (11) and the relay unit (12).

4. The camera apparatus (10) of any one of claims 1 to 3, wherein
wireless communication between the first device (20) and the relay unit (12) is performed based on a first communication scheme, and
wireless communication between the second device (31) and the camera unit (11) is performed based on a second communication scheme, and
the camera unit (11) or the relay unit (12) includes a converter (121) configured to
convert, for transmission of the monitoring result by the second device (31) to the first device (20), a signal containing the monitoring result transmitted based on the second communication scheme into a signal available for transmission based on the first communication scheme, and
convert, for transmission of the information on the first device (20) to the second device (31), a signal containing the information transmitted based on the first communication scheme into a signal available for transmission based on the second communication scheme.

5. The camera apparatus (10) of any one of claims 1 to 4, wherein
the relay unit (12) further has a function of transmitting, via the communicator (110) to the second device (31), information transmitted from the first device (20) and addressed to the second device (31).

6. A communication system, comprising:
the camera apparatus (10) of any one of claims 1 to 5;
at least one first device (20) disposed in a second area (E2) separated from a first area (E1) by an obstacle (200), the at least one first device (20) being configured to perform wireless communication with the camera apparatus (10); and
at least one second device (31) being disposed in the first area (E1), the at least one second device (31) being configured to perform wireless communication with the camera apparatus (10).

## Patentansprüche

1. Kameravorrichtung (10), aufweisend:
eine Kameraeinheit (11), die in einem ersten Bereich (E1) angeordnet ist, der durch ein Hindernis (200) von einem zweiten Bereich (E2) getrennt ist, wobei die Kameraeinheit (11) ein Kameramodul (112) enthält, das konfiguriert ist, um ein Bild eines Teils des ersten Bereichs (E1) aufzunehmen;
eine Relaiseinheit (12), die in dem zweiten Bereich (E2) angeordnet ist, wobei die Relaiseinheit (12) eine Funktion hat, um das Bild, das von der Kameraeinheit (11) aufgenommen wurde, an eine erste Vorrichtung (20) in dem zweiten Bereich (E2) durch drahtlose Kommunikation zu übertragen; und
einen Verbinder (13), der die Kameraeinheit (11) elektrisch mit der Relaiseinheit (12) verbindet,
wobei die Kameraeinheit (11) ferner einen Kommunikator (110) enthält, der konfiguriert ist, um mit einer zweiten Vorrichtung (31) drahtlose Kommunikation durchzuführen, die in dem ersten Bereich (E1) angeordnet ist und konfiguriert ist, um in dem ersten Bereich (E1) eine Überwachung durchzuführen,
wobei die Relaiseinheit (12) ferner eine Funktion hat, um ein Überwachungsergebnis, das von der zweiten Vorrichtung (31) übertragen wird und das von dem Kommunikator (110) empfangen wird, durch die zweite Vorrichtung (31) an die erste Vorrichtung (20) zu übertragen,
**dadurch gekennzeichnet**:
wenn die Relaiseinheit (12) ein Signal empfängt, das das Überwachungsergebnis enthält, das von der zweiten Vorrichtung (31) übertragen wurde, die Relaiseinheit (12) konfiguriert ist, um zu bestimmen, ob ein weiters Signal an die erste Vorrichtung (20) übertragen wird oder nicht; und
falls die Relaiseinheit (12) bestimmt, dass kein weiteres Signal übertragen wird, die Relaiseinheit (12) konfiguriert ist, um das Überwachungsergebnis an die erste Vorrichtung (20) zu übertragen;
und falls die Relaiseinheit (12) bestimmt, dass ein weiteres Signal übertragen wird,
i) die Relaiseinheit (12) konfiguriert ist, um das empfangene Signal zu verwerfen und die zweite Vorrichtung (31) aufzufordern, ein Signal erneut zu senden, oder
ii) die Relaiseinheit (12) konfiguriert ist, um das empfangene Signal zu halten, bis die Übertragung des weiteren Signals beendet ist, und wenn die Übertragung des weiteren Signals beendet ist, die Relaiseinheit (12) konfiguriert ist, um das gehaltene Signal zu übertragen.

2. Kameravorrichtung (10) nach Anspruch 1, wobei
das Hindernis (200) eine Trennwand (2a) ist, die eine Öffnung (2b) und eine zu öffnende und zu schließende Einheit (2c) aufweist, wobei sich die Öffnung (2b) ausgehend von dem ersten Bereich (E1) durch den zweiten Bereich (E2) erstreckt, wobei die zu öffnende und zu schließende Einheit (2c) an der Öffnung (2b) zu öffnen und zu schließen ist, der Verbinder (13) aufweist:
ein erstes Befestigungsteil (13a), das die Kameraeinheit (11) befestigt,
ein zweites Befestigungsteil (13b), das die Relaiseinheit (12) befestigt, und
eine Kupplung (13c), die das erste Befestigungsteil (13a) mit dem zweiten Befestigungsteil (13b) koppelt und die in einem Spalt zwischen der Öffnung (2b) und der zu öffnenden und zu schließenden Einheit (2c) angeordnet ist.

3. Kameravorrichtung (10) nach Anspruch 1 oder 2, wobei
der Verbinder (13) eine Signalleitung aufweist, die die Kameraeinheit (11) elektrisch mit der Relaiseinheit (12) verbindet und Kommunikation zwischen der Kameraeinheit (11) und der Relaiseinheit (12) ermöglicht.

4. Kameravorrichtung (10) nach einem der Ansprüche 1 bis 3, wobei
drahtlose Kommunikation zwischen der ersten Vorrichtung (20) und der Relaiseinheit (12) auf der Grundlage eines ersten Kommunikationsschemas durchgeführt wird, und
drahtlose Kommunikation zwischen der zweiten Vorrichtung (31) und der Kameraeinheit (11) auf der Grundlage eines zweiten Kommunikationsschemas durchgeführt wird, und
die Kameraeinheit (11) oder die Relaiseinheit (12) einen Konverter (121) enthält, der konfiguriert ist, um ein Signal, das das Überwachungsergebnis enthält, das auf der Grundlage des zweiten Kommunikationsschemas übertragen wurde, für eine Übertragung des Überwachungsergebnisses durch die zweite Vorrichtung (31) an die erste Vorrichtung (20) in ein Signal umzuwandeln, das für eine Übertragung auf der Grundlage des ersten Kommunikationsschemas verfügbar ist, und
ein Signal, das die Informationen enthält, die auf der Grundlage des ersten Kommunikationsschemas übertragen wurden, für eine Übertragung der Informationen auf der ersten Vorrichtung (20) an die zweite Vorrichtung (31) in ein Signal umzuwandeln, das für eine Übertragung auf der Grundlage des zweiten Kommunikationsschemas verfügbar ist.

5. Kameravorrichtung (10) nach einem der Ansprüche 1 bis 4, wobei
die Relaiseinheit (12) ferner ein Funktion hat, um Informationen, die von der ersten Vorrichtung (20) übertragen und an die zweite Vorrichtung (31) adressiert sind, über den Kommunikator (110) an die zweite Vorrichtung (31) zu übertragen.

6. Kommunikationssystem, die Kameravorrichtung (10) nach einem der Ansprüche 1 bis 5 aufweisend;
wobei mindestens eine erste Vorrichtung (20) in einem zweiten Bereich (E2) angeordnet ist, der von einem ersten Bereich (E1) durch ein Hindernis (200) getrennt ist, wobei die mindestens eine erste Vorrichtung (20) konfiguriert ist, um mit der Kameravorrichtung (10) drahtlose Kommunikation durchzuführen; und
wobei mindestens eine zweite Vorrichtung (31) in dem ersten Bereich (E1) angeordnet ist, wobei die mindestens eine zweite Vorrichtung (31) konfiguriert ist, um mit der Kameravorrichtung (10) drahtlose Kommunikation durchzuführen.

## Revendications

1. Appareil de caméra (10), comprenant :
une unité de caméra (11) disposée dans une première zone (E1) séparée d'une seconde zone (E2) par un obstacle (200), l'unité de caméra (11) incluant un module de caméra (112) configuré de manière à capturer une image d'une partie de la première zone (E1) ;
une unité de relais (12) disposée dans la seconde zone (E2), l'unité de relais (12) ayant pour fonction de transmettre l'image capturée par l'unité de caméra (11) à un premier dispositif (20) dans la seconde zone (E2) par le biais d'une communication sans fil ; et
un connecteur (13) qui connecte électriquement l'unité de caméra (11) à l'unité de relais (12) ;
l'unité de caméra (11) incluant en outre un communicateur (110) configuré de manière à mettre en œuvre une communication sans fil avec un second dispositif (31) qui est disposé dans la première zone (E1) et est configuré de manière à mettre en œuvre une surveillance dans la première zone (E1) ;
l'unité de relais (12) ayant en outre pour fonction de transmettre, au premier dispositif (20), un résultat de surveillance pour la surveillance mise en œuvre par le second dispositif (31), lequel est transmis à partir du second dispositif (31) et reçu par le communicateur (110) ;
**caractérisé en ce que** :
lorsque l'unité de relais (12) reçoit un signal contenant le résultat de surveillance transmis par le second dispositif (31), l'unité de relais (12) est configurée de manière à déterminer si un autre signal est ou n'est pas en cours de transmission au premier dispositif (20) ; et
si l'unité de relais (12) détermine qu'un autre signal n'est pas en cours de transmission, l'unité de relais (12) est configurée de manière à transmettre le résultat de surveillance au premier dispositif (20) ; et
si l'unité de relais (12) détermine qu'un autre signal est en cours de transmission :
i) l'unité de relais (12) est configurée de manière à rejeter le signal reçu et à demander au second dispositif (31) de transmettre à nouveau un signal ; ou
ii) l'unité de relais (12) est configurée de manière à maintenir le signal reçu jusqu'à ce que la transmission de l'autre signal soit terminée, et lorsque la transmission de l'autre signal est terminée, l'unité de relais (12) est configurée de manière à transmettre le signal maintenu.

2. Appareil de caméra (10) selon la revendication 1, dans lequel :
l'obstacle (200) est une paroi de séparation (2a) présentant une ouverture (2b) et une unité pouvant être ouverte et fermée (2c), l'ouverture (2b) s'étendant de la première zone (E1) à la seconde zone (E2), l'unité pouvant être ouverte et fermée (2c) pouvant être ouverte et fermée au niveau de l'ouverture (2b) ;
le connecteur (13) inclut :
une première partie de fixation (13a) qui fixe l'unité de caméra (11) ;
une seconde partie de fixation (13b) qui fixe l'unité de relais (12) ; et
un coupleur (13c) qui couple la première partie de fixation (13a) à la seconde partie de fixation (13b) et qui est disposé dans un espace entre l'ouverture (2b) et l'unité pouvant être ouverte et fermée (2c).

3. Appareil de caméra (10) selon la revendication 1 ou 2, dans lequel :
le connecteur (13) inclut une ligne de signal connectant électriquement l'unité de caméra (11) à l'unité de relais (12) et permettant la communication entre l'unité de caméra (11) et l'unité de relais (12).

4. Appareil de caméra (10) selon l'une quelconque des revendications 1 à 3, dans lequel :
une communication sans fil entre le premier dispositif (20) et l'unité de relais (12) est mise en œuvre sur la base d'un premier schéma de communication ; et
une communication sans fil entre le second dispositif (31) et l'unité de caméra (11) est mise en œuvre sur la base d'un second schéma de communication ; et
l'unité de caméra (11) ou l'unité de relais (12) inclut un convertisseur (121) configuré de manière à :
convertir, en vue d'une transmission du résultat de surveillance par le second dispositif (31) au premier dispositif (20), un signal contenant le résultat de surveillance transmis sur la base du second schéma de communication, en un signal disponible en vue d'une transmission sur la base du premier schéma de communication ; et
convertir, en vue d'une transmission des informations sur le premier dispositif (20) au second dispositif (31), un signal contenant les informations transmises sur la base du premier schéma de communication, en un signal disponible en vue d'une transmission sur la base du second schéma de communication.

5. Appareil de caméra (10) selon l'une quelconque des revendications 1 à 4, dans lequel :
l'unité de relais (12) a en outre pour fonction de transmettre, par l'intermédiaire du communicateur (110), au second dispositif (31), des informations transmises à partir du premier dispositif (20) et adressées au second dispositif (31).

6. Système de communication, comprenant :
l'appareil de caméra (10) selon l'une quelconque des revendications 1 à 5 ;
au moins un premier dispositif (20) disposé dans une seconde zone (E2) séparée d'une première zone (E1) par un obstacle (200), ledit au moins un premier dispositif (20) étant configuré de manière à mettre en œuvre une communication sans fil avec l'appareil de caméra (10) ; et
au moins un second dispositif (31) disposé dans la première zone (E1), ledit au moins un second dispositif (31) étant configuré de manière à mettre en œuvre une communication sans fil avec l'appareil de caméra (10).
